Europäisches Patentamt

European Patent Office

Office européen des brevets

(19)

(11) Publication number : **0 444 879 A1**

## (12) EUROPEAN PATENT APPLICATION

(21) Application number : **91301541.8**

(22) Date of filing : **26.02.91**

(51) Int. Cl.⁵ : **F16K 43/00**

(30) Priority : **27.02.90 IE 698/90**

(43) Date of publication of application :
**04.09.91 Bulletin 91/36**

(84) Designated Contracting States :
**AT BE CH DE DK ES FR GB GR IT LI LU NL SE**

(71) Applicant : **Branagan, Anthony Joseph
Newtown Upper
Rathcoole, County Dublin (IE)**
Applicant : **Maguire, Michael
The Ranch House, Old Kingswood, Naas Road
Clondalkin, County Dublin (IE)**
Applicant : **O'Reilly, Edward Patrick
19 Bangor Drive
Crumlin, Dublin 12 (IE)**

(72) Inventor : **O'Reilly, Edward Patrick
19 Bangor Drive
Crumlin, Dublin 12 (IE)**

(74) Representative : **Howden, Christopher Andrew
et al
FORRESTER & BOEHMERT
Widenmayerstrasse 4/I
W-8000 München 22 (DE)**

(54) **Improved control valve.**

(57) A control-valve for controlling fluid-flow comprises a valve-housing (3) having inlet and outlet ports (11,12) for connection to a fluid-flow system, inlet and outlet passages (13,14) communicating with the inlet and outlet ports (11,12) and a valve-member (22) controlling the flow of fluid from the inlet passage (13) to the outlet passage (14); a shut-off device (35) is provided in association with the inlet passage (13) for interrupting fluid-flow therein when required, and the outlet passage (14) is provided with a drain-port which is normally closed by a closure plug (43) which can be released when required, to allow fluid to be drained from the outlet passage (14) to the exterior.

FIG. 3

# IMPROVED CONTROL-VALVE

This invention relates to control valves, such as are used to control the flow of water, steam, gas, air, oil or other fluids.

The invention is particularly concerned with such valves as are used to control the flow of hot water in heating systems in private homes, or in connection with larger scale heating systems in hotels, hospitals, factories and so on. The invention is also applicable to valves which are used to control the flow of liquids and gases in connection with industrial processes, so as to regulate flow to and from an appliance forming part of the process system.

In connection with domestic and other heating systems, control valves are used to control individual heating appliances, referred to hereinafter by the usual designation of "radiator", although such appliances actually transmit heat by convection.

The principal object of the invention is to provide an improved control-valve for use in systems such as are referred to above.

In such systems, it is frequently necessary to carry out maintenance work on individual appliances of the system or on the control-valves themselves. Hitherto, in order to carry out such work on just a single appliance of the system, if has frequently been necessary to drain the whole system, or at least a substantial part of the system, before maintenance work can commence, and this renders such work very time-consuming and uneconomical.

It is therefore a further object of the invention, to provide a control-valve incorporating improved means for draining an appliance to which the valve is fitted.

According to the invention there is provided a control-valve for controlling fluid-flow, comprising a valve-housing having inlet and outlet ports for connection to a fluid-flow system, inlet and outlet passages in the valve-housing communicating respectively with the inlet and outlet ports, and a valve-member controlling the flow of fluid from the inlet passage to the outlet passage, wherein a shut-off device is provided in association with the inlet passage, for interrupting fluid-flow therein when required, and the outlet passage is provided with a drain-port which is normally closed by a closure plug, which plug can be released when required, to allow fluid to be drained from the outlet passage to the exterior.

When it is required to drain an appliance to which the valve of the invention is fitted, it is merely necessary to close the shut-off device so as to interrupt the flow of fluid through the inlet passage of the valve and to open the closure plug of the drain-port, so that fluid can be discharged through the drain-port in a readily controlled manner.

In connection with domestic and other heating systems, when such a system comprises a number of heating appliances or radiators, it may be desirable for the control valves of the radiators to be controlled from a central location, possibly in accordance with a predetermined programme. This makes it possible, for example, to switch the radiators in a heating system on and off automatically at different times, so as to provide different heating programmes in the living rooms or bedrooms of a private house, or so as to enable individual radiators to be switched on and off from a central location, in the case of hotel-rooms, for example.

For this purpose, the valve of the invention may be constructed so that it can be electrically or electronically controlled from a location remote from the valve. In particular, the valve may be solenoid-operated, so that it can be monitored and controlled from a central operating point.

One particular form of valve constructed in accordance with the invention will now be described in greater detail, by way of example only, and with reference to the accompanying drawings in which:

Figure 1 is a side view of the valve;

Figure 2 is a view corresponding to Figure 1, but with the components of the valve shown in "exploded" relationship and with the body of the valve shown in vertical section;

Figure 3 is a plan view of the valve-body, viewed from above.

The drawings show a solenoid-operated control valve suitable for controlling a heating appliance or radiator forming part of an electrically or electronically controlled heating system.

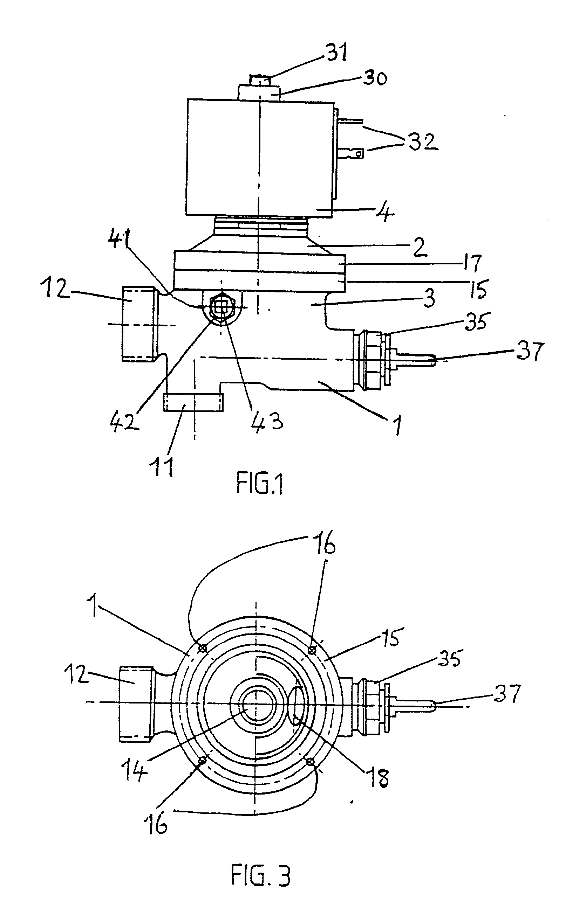

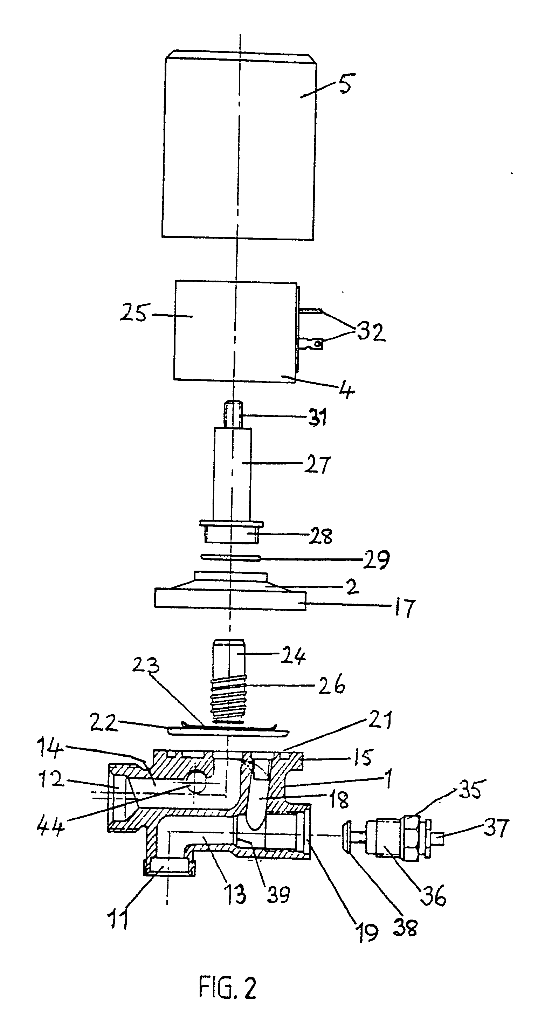

Referring to the drawings, the valve comprises a body 1 and a cap 2 mounted on the valve-body 1 so as to form a housing 3 (Figure 1). A control-solenoid 4 is mounted on top of the housing 3. A cover 5 is also provided, being shown only in Figure 2. In the fully assembled condition of the valve, the cover 5 snaps into place over the solenoid 4.

The valve-body 1 and the cap 2 are made of brass by casting or by a combination of hot-pressing and machining operations and the externally exposed surfaces thereof have a chromium-plated finish.

The valve-body 1 has an inlet port 11 for connection to a feed pipe of the heating system and an outlet port 12 for connection to a radiator of the system, the ports 11 and 12 being formed by internally screw-threaded bosses on the valve-body 1. The ports 11 and 12 communicate with passages 13 and 14 in the valve-body 1. (See Figure 2).

Referring to Figure 3, it will be seen that the valve-body 1 has an annular flange 15 formed with four threaded holes 16. The cap 2 has a flange 17 which, in the assembled condition of the valve shown in Figure 1, engages with the flange 15 on the valve-body 1 and the cap 2 is secured in position by bolts engaging in the holes 16 in the flange 15. Thus a flow-chamber is formed within the cap 2 providing a flow-path for water flowing from the inlet port 11 to the outlet port 12 via passages 13 and 14.

The valve-body 1 is machined to form a valve-seat 21. A diaphragm 22 is mounted within the cap 2. The diaphragm 22 and a backing disc 23 are carried by a shank 24 which forms the armature of solenoid 4. The energising coil of the solenoid 4 is not visible in the drawings, being inside solenoid casing 25. A compression spring 26 is mounted on shank 24. The shank 24 extends upwards through cap 2 and is a sliding fit into a sleeve 27. The sleeve 27 engages with cap 2 by mans of a screw-threaded collar 28, with the interposition of an O-ring 29.

In the assembled condition of the valve, the periphery of diaphragm 22 is trapped between flange 15 of valve-body 1 and flange 17 of cap 2. Thus, diaphragm 22 serves as a sealing gasket while at the same time, the central portion thereof can move as necessary. The sleeve 27 extends inside the solenoid-casing 25 and is retained in position by a nut 30 screwed on to a threaded stub 31 (see Figure 1). Thus, the diaphragm 22 is biassed into engagement with valve-seat 21 by the compression spring 26. The diaphragm 22 normally closes off the flow-path between passages 13 and 14 so as to maintain the valve in its shut-off condition. The valve is opened by actuating the solenoid 3 so as to lift diaphragm 22 out of engagement with valve-seat 21.

The solenoid 4 is connected to the control circuit of the heating installation by means of wiring terminals 32 mounted on casing 25, so that the valve can be operated from a remote location, as herein described.

The inlet passage 13 is the valve-body 1 communicates with the valve-seat 21 by way of a laterally extending portion 18 thereof. Inlet passage 13 also has an opening 19 for mounting a shut-off device 35 associated with passage 13. Shut-off device 35 comprises a screw-threaded member 36 which is tightly screwed into engagement in opening 19. A threaded spindle 37 passes through the member 36 and carries an obturating member constituted by a valve-disc 38. When it is required to interrupt the fluid-flow in passage 13, a spanner or key is engaged with the head of spindle 37 so that spindle 13 can be turned to bring the valve-disc 38 into fluid-tight engagement with a seating 39 formed in the wall of passage 13.

Two raised bosses are formed on either side of the valve-body 1. One of these bosses is visible at 41 in Figure 1. The other boss is formed at a corresponding position on the other side of the valve-body 1, which is not visible in Figure 1. After the initial manufacture of the valve-body 1, one or other of the bosses is drilled so as to provide a drain-port at one side or the other of valve-body 1, according to the location at which the valve is to be used. Thus in Figure 1, boss 41 has been drilled to form a drain-port 42 to which is fitted a closure-plug 43. When required, plug 43 is released by means of a spanner or key, to allow fluid to be discharged from the passage 14 to the exterior.

The corresponding boss at the other side of valve-body 1 is left blank, but the position at which a drain-port would be formed at this side of the valve body if required and the position of a corresponding closure plug are indicated by circle 44 in Figure 2.

It will be noted that in the position of the valve shown in Figure 1, the port 11 is arranged with its axis vertical while the axis of the port 12 is at right angles thereto. Thus, the valve can be fitted to a heating appliance either in the disposition shown in Figure 1, with the port 12 directed towards the left, or in the opposite disposition, with the port 12 directed towards the right, as the circumstances require. Also, the valve selected for use in any particular case will have its drain-port 42 and closure-plug 43 at one side or the other of the valve-body, to suit the circumstances.

When it is necessary for an individual heating appliance or radiator to be drained down (e.g. for servicing). The shut-off device 35 of the valve fitted to this appliance is closed as previously described, in order to shut off the flow of fluid through the inlet passage 13, 18 of the valve. The closure plug 42 is then released, so that the limited quantity of fluid contained in the appliance can be drained away in a controlled manner, without any spillage. This can be done without interrupting the flow in the overall system, so as not to interrupt the heating of other rooms or areas served by the system.

Valves in accordance with the invention can be constructed so that the dimensions of their pipe-connections correspond to those of existing standard valves. This enables the valves of an existing system to be replaced with valves in accordance with the invention, without any alteration to existing pipe-work and radiators. Moreover, the valve of the invention can be constructed so that it will function in any angular mounting position relative to the axis of the adjacent pipe-work.

The valve described above with reference to the drawings is primarily intended to be controlled from a remote location, such as from a manually operated central control panel, or automatically in accordance with a pre-stored operating programme. However, such a valve may also be fitted with a thermostatic relay, so that it will also respond to changes in the local temperature where it is located.

Although the valve described is intended to facilitate shut-down for maintenance purposes, nevertheless, it is believed that the construction of the valve will be found to render the valve itself highly reliable in operation, and free of various defects which are found in existing valves. It has been found that with the arrangement of the diaphragm 22 as described, the valve operates in a reliable manner over a long period. Certain grades of nylon-reinforced nitrile rubber have been found to be very satisfactory for the manufacture of the diaphragm.

The above form of valve has been described by way of example only and the details thereof may be varied within the scope of the invention as defined by the appended claims.

The features disclosed in the foregoing description, in the following claims and/or in the accompanying drawings may, both separately and in any combination thereof, be material for realising the invention in diverse forms thereof.

## Claims

1. A control-valve for controlling fluid-flow, comprising a valve-housing having inlet and outlet ports for connection to a fluid-flow system, inlet and outlet passages in the valve-housing communicating respectively with the inlet and outlet ports, and a valve-member controlling the flow of fluid from the inlet passage to the outlet passage, wherein a shut-off device is provided in association with the inlet passage, for interrupting fluid-flow therein when required, and the outlet passage is provided with a drain-port which is normally closed by a closure plug, which plug can be released when required, to allow fluid to be drained from the outlet passage to the exterior.

2. A control-valve according to claim 1, wherein a solenoid is provided for actuating the valve-member to control fluid-flow.

3. A control-valve according to claim 1 or claim 2, wherein the valve-member comprises a diaphragm co-operating with an annular valve-seat provided in the housing.

4. A control-valve according to claim 3, wherein the housing comprises a body with the valve-seat formed thereon and cap detachably secured to the body to form a flow-chamber for fluid-flow from the inlet passage to the outlet passage, and wherein the periphery of the diaphragm is held in sealing engagement between the cap and the body.

5. A control-valve according to claim 3 or claim 4, wherein a biassing spring is provided, biassing the diaphragm into engagement with the valve-seat.

6. A control-valve according to any of the preceding claims, wherein the shut-off device comprises an obturating member co-operating with a seating in the inlet passage.

7. A control-valve according to claim 6, wherein the obturating member is mounted on a spindle, by means of which the obturating member can be moved into and out of engagement with the seating.

8. A control-valve according to any of the preceding claims, wherein the closure plug is in screw-threaded engagement in the drain-port so that it can be released when required.

FIG.1

FIG. 3

FIG. 2

European Patent
Office

# EUROPEAN SEARCH REPORT

Application Number

| | DOCUMENTS CONSIDERED TO BE RELEVANT | | EP 91301541.8 |
|---|---|---|---|

| Category | Citation of document with indication, where appropriate, of relevant passages | Relevant to claim | CLASSIFICATION OF THE APPLICATION (Int. Cl.5) |
|---|---|---|---|
| Y | GB - A - 2 092 715 (MIDLAND BRASS) * Totality * | 1,2,6, 8 | F 16 K 43/00 |
| Y | US - A - 3 989 222 (YOSHIYASU) * Totality * | 1,2,6, 8 | |
| A | GB - A - 1 547 477 (LUCIA) * Fig. 1,2 * | 1 | |
| A | GB - A - 1 584 252 (WATKINS) * Fig. 1 * | 1 | |
| A | CH - A - 532 740 (BORTOLAN) * Totality; esp. fig. 1, pos. Nr. 19,15 * | 1 | |

| TECHNICAL FIELDS SEARCHED (Int. Cl.5) |
|---|
| F 16 K 11/00 F 16 K 21/00 F 16 K 24/00 F 16 K 27/00 F 16 K 31/00 F 16 K 43/00 F 24 D 19/00 |

The present search report has been drawn up for all claims

| Place of search | Date of completion of the search | Examiner |
|---|---|---|
| VIENNA | 23-05-1991 | WERDECKER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)